# EUROPEAN PATENT SPECIFICATION

(11) **EP 4 080 797 B1**
(45) Date of publication and mention of the grant of the patent: **21.05.2025**
(21) Application number: 20912214.2
(22) Date of filing: 30.12.2020
(51) Int. Cl.: H04J 14/02, G02B 6/293

(54) **ADD/DROP FILTER, OPTICAL ADD/DROP MULTIPLEXER AND WAVELENGTH CONTROL METHOD**
ADD/DROP-FILTER, OPTISCHER ADD/DROP-MULTIPLEXER UND WELLENLÄNGENSTEUERUNGSVERFAHREN
FILTRE D'INSERTION/EXTRACTION, MULTIPLEXEUR D'INSERTION/EXTRACTION OPTIQUE ET PROCÉDÉ DE COMMANDE DE LONGUEUR D'ONDE

(30) Priority: 08.01.2020 CN 202010018395
(43) Date of publication of application: 26.10.2022
(73) Proprietor: Huawei Technologies Co., Ltd., Shenzhen, Guangdong 518129, (CN); Politecnico di Milano, 20133 Milano (IT)
(72) Inventor: MELLONI, Andrea, 20133 Milano (IT); MORICHETTI, Francesco, 20133 Milano (IT); MAZIYAR, Milanizadeh, 20133 Milano (IT); JI, Ruiqiang, Shenzhen, Guangdong 518129 (CN); MI, Guangcan, Shenzhen, Guangdong 518129 (CN); ZHANG, Zecen, Shenzhen, Guangdong 518129 (CN)
(74) Representative: Körber, Martin Hans
(86) International application number: PCT/CN2020/141355
(87) International publication number: WO 2021/139580

(56) References cited:
- EP-A1- 3 703 287
- CN-A- 101 840 028
- CN-A- 101 840 029
- CN-A- 103 995 318
- CN-A- 106 788 864
- CN-A- 108 802 907
- CN-A- 109 802 743
- CN-A- 109 802 743
- CN-A- 110 095 842
- US-A1- 2008 232 409
- US-A1- 2011 170 821
- US-B2- 6 928 209

## Description

### TECHNICAL FIELD

This application relates to the field of optical communication, and in particular, to an add/drop filter, an optical add/drop multiplexer, and a wavelength control method.

### BACKGROUND

Generally, there are two types of optical add/drop multiplexers (Optical Add/Drop Multiplexers, OADMs) commonly used in the wavelength division field: a space optics OADM and a waveguide OADM. In comparison, the waveguide OADM has advantages of lower costs and higher integration.

The waveguide OADM includes a plurality of cascaded add/drop filters (Add/Drop Filters, ADFs). The add/drop filter is a key component in an optical fiber dense wavelength division multiplexing system, and can implement wavelength adding and wavelength dropping of a specific wavelength or a specific wavelength combination in a main fiber link. An existing add/drop filter includes a first waveguide, a second waveguide, and a plurality of micro rings between the first waveguide and the second waveguide The first waveguide includes an input port and an output port, and the second waveguide includes an add port and a drop port. A tunable coupler (Tunable Coupler, TC) is disposed at a position at which the first waveguide is coupled to a first micro ring, and the TC is configured to adjust a coupling coefficient between the first waveguide and the first micro ring. Before an operating wavelength of the add/drop filter is adjusted, the coupling coefficient usually needs to be adjusted to block wavelength adding or wavelength dropping of the second waveguide, and after the operating wavelength is adjusted, the coupling coefficient is adjusted to recover the wavelength adding or the wavelength dropping of the second waveguide.

US 2011/0170821 A1 discloses a multiple ring waveguide resonant optical cavity structure that comprises a minimum of two ring waveguide resonant optical cavities located and formed supported over a substrate, where at least one of the ring waveguide resonant optical cavities includes as a tuning component a PIN (i.e., p-doped/intrinsic/n-doped) diode integral to the at least one of the at least two ring waveguide resonant optical cavities.

CN 109 802 743 A and EP 3 703 287 A1 disclose an add/drop filter including: an input port, an output port, an add port, a drop port, N cascaded annular waveguides coupled to each other, where N is a positive integer greater than or equal to 2, and N micro heaters respectively disposed around the N cascaded annular waveguides and configured to set the resonant wavelength of the add/drop filter to a target operating wavelength.

US 2008/232409 A1 discloses a double ring resonator where ring resonators of different sizes are coupled through a directional coupler, a laser diode (LD) side waveguide connected at one end to the ring resonator through a directional coupler, and a reflection side waveguide connected at one end to the ring resonator through a directional coupler.

### SUMMARY

Embodiments of this application provide an add/drop filter, an optical add/drop multiplexer, and a wavelength control method.

According to a first aspect, an embodiment of this application provides an add/drop filter. The filter includes a first waveguide, a second waveguide, and a plurality of cascaded ring waveguides. The first waveguide includes an input port and an output port. The second waveguide includes an add port and a drop port. One of the plurality of cascaded ring waveguides is coupled to the first waveguide, and another of the plurality of cascaded ring waveguides is coupled to the second waveguide. An electrode is disposed on each of the ring waveguides. A loss adjusting apparatus is disposed on at least one of the plurality of cascaded ring waveguides except the one of the plurality of ring waveguides, and the loss adjusting apparatus is configured to adjust an insertion loss in the at least one ring waveguide.

In this implementation, before an operating wavelength of the add/drop filter is adjusted, the insertion loss in the at least one ring waveguide is adjusted to block signal transmission between the first waveguide and the second waveguide. Because the loss adjusting apparatus is not disposed on the ring waveguide coupled to the first waveguide, in a process of using the loss adjusting apparatus, critical coupling on the ring waveguide coupled to the first waveguide is avoided, thereby ensuring normal transmission of a signal in the first waveguide.

In some possible implementations, circumferences of at least two of the plurality of ring waveguides are different. Because ring waveguides with different circumferences correspond to different free spectral ranges (free spectral range, FSR), a plurality of ring waveguides with different radii extend the FSR of the add/drop filter by using a Vernier effect.

In some possible implementations, the add/drop filter further includes a controller, and the controller is configured to adjust the insertion loss in the at least one ring waveguide by controlling the loss adjusting apparatus on the at least one ring waveguide. In this implementation, a specific implementation of controlling the loss adjusting apparatus is provided, thereby improving practicability of this solution.

In some possible implementations, the controller is further configured to adjust a resonance wavelength of each of the ring waveguides by controlling a temperature or a voltage of the electrode on each of the ring waveguides. In this implementation, two implementations of adjusting the resonance wavelength of each of the ring waveguides are provided, thereby improving scalability of this solution.

In some possible implementations, a first tunable coupler (Tunable Coupler, TC) is disposed at a position at which the first waveguide is coupled to the one of the ring waveguides, and a second tunable coupler is disposed at a position at which the second waveguide is coupled to the another of the ring waveguides. Alternatively, only one of the first tunable coupler and the second tunable coupler may be reserved. Coupling coefficients of the first tunable coupler and the second tunable coupler are adjustable, and therefore bandwidth and in-band isolation of the add/drop filter can be finely adjusted, thereby optimizing performance of the add/drop filter.

In some possible implementations, the ring waveguide is a micro ring or a micro disk, thereby improving flexibility of this solution.

In some possible implementations, a material of the first waveguide, the second waveguide, and the ring waveguide is silicon, III-V, silicon nitride SiN, or lithium niobate LiNbO3. In this implementation, several waveguide materials are provided, thereby improving implementability of this solution.

According to a second aspect, an embodiment of this application provides an optical add/drop multiplexer (Optical Add/Drop Multiplexer, OADM). The OADM includes a plurality of the add/drop filters as shown in any one of the implementations of the first aspect that are cascaded.

According to a third aspect, an embodiment of this application provides a wavelength control method based on an add/drop filter. The method includes the following steps.

The add/drop filter increases a first insertion loss in a target ring waveguide to a second insertion loss, to block signal transmission between a first waveguide and a second waveguide. The add/drop filter includes the first waveguide, the second waveguide, and a plurality of cascaded ring waveguides, and the target ring waveguide includes at least one of the plurality of cascaded ring waveguides except a first ring waveguide, where the first ring waveguide is a ring waveguide, in the plurality of cascaded ring waveguides, coupled to the first waveguide. Then, the add/drop filter adjusts a first resonance wavelength of each of the ring waveguides to a second resonance wavelength. Further, the add/drop filter recovers the second insertion loss in the target ring waveguide to the first insertion loss, to recover the signal transmission between the first waveguide and the second waveguide.

In some possible implementations, that the add/drop filter adjusts a first resonance wavelength of each of the ring waveguides to a second resonance wavelength includes the following steps.

The add/drop filter adjusts the first resonance wavelength of each of the ring waveguides to the second resonance wavelength by controlling a temperature or a voltage of an electrode on each of the ring waveguides. In this implementation, a specific implementation of adjusting the resonance wavelength of the ring waveguide is provided, thereby improving practicability of this solution.

In some possible implementations, that the add/drop filter adjusts a first resonance wavelength of each of the ring waveguides to a second resonance wavelength includes the following steps.

The add/drop filter adjusts the first resonance wavelength of each of the ring waveguides, so that the plurality of the ring waveguides are detuned, in other words, each of the ring waveguides has a different resonance wavelength. A resonant condition of the add/drop filter is destroyed, and therefore all optical signals input through an input port are output through an output port. Then, a resonance wavelength of each of the ring waveguides is adjusted to the second resonance wavelength. The signal transmission between the first waveguide and the second waveguide is further blocked, to increase a blocking effect.

It can be learnt from the foregoing technical solutions that embodiments of this application have the following advantages: Because the loss adjusting apparatus is not disposed on the ring waveguide coupled to the first waveguide, in a process of using the loss adjusting apparatus, critical coupling on the ring waveguide coupled to the first waveguide is avoided, thereby ensuring normal transmission of a signal in the first waveguide.

### BRIEF DESCRIPTION OF DRAWINGS

FIG. 1 is a schematic structural diagram of a first add/drop filter according to an embodiment of this application;
FIG. 2 is a schematic diagram of a drop spectrum corresponding to a drop port during normal dropping;
FIG. 3 is a schematic diagram of a drop spectrum corresponding to a drop port when a filtering function is disabled;
FIG. 4 is a schematic structural diagram of a second add/drop filter according to an embodiment of this application;
FIG. 5 is a schematic structural diagram of a third add/drop filter according to an embodiment of this application;
FIG. 6 is a schematic structural diagram of a fourth add/drop filter according to an embodiment of this application;
FIG. 7 is a schematic structural diagram of a fifth add/drop filter according to an embodiment of this application;
FIG. 8 is a schematic structural diagram of an optical add/drop multiplexer according to an embodiment of this application; and
FIG. 9 is a schematic flowchart of a wavelength control method based on an add/drop filter according to an embodiment of this application.

### DESCRIPTION OF EMBODIMENTS

Embodiments of this application provide an add/drop filter, an optical add/drop multiplexer, and a wavelength control method. Because a loss adjusting apparatus is not disposed on a ring waveguide coupled to a first waveguide, in a process of using the loss adjusting apparatus, critical coupling on the ring waveguide coupled to the first waveguide is avoided, thereby ensuring normal transmission of a signal in the first waveguide.

It should be noted that the terms "first", "second", "third", "fourth", and the like in the specification, claims, and accompanying drawings of this application are used to distinguish between similar objects, but do not limit a specific order or sequence. It should be understood that the foregoing terms are interchangeable in proper circumstances, so that embodiments described in this application can be implemented in other orders rather than the content described in this application. Moreover, the terms "include", "have", or any other variant thereof are intended to cover non-exclusive inclusion. For example, processes, methods, systems, products, or devices that include a series of steps or units are not limited to the steps or the units that are clearly listed, and may include other steps and units that are not clearly listed or that are essential for the processes, methods, products, or devices.

An existing add/drop filter includes a first waveguide, a second waveguide, and a plurality of micro rings between the first waveguide and the second waveguide. A tunable coupler is disposed at a position at which the first waveguide is coupled to a first micro ring, and is configured to adjust a coupling coefficient between the first waveguide and the first micro ring. It is found through research that, in a changing process of the coupling coefficient, critical coupling may occur on the first micro ring coupled to the first waveguide at a specific moment. Consequently, a phase response of a pass-through spectrum corresponding to an output port in the first waveguide is distorted at the moment, affecting normal transmission of a signal in the first waveguide.

Therefore, an embodiment of this application provides an add/drop filter, to ensure the normal transmission of the signal in the first waveguide.

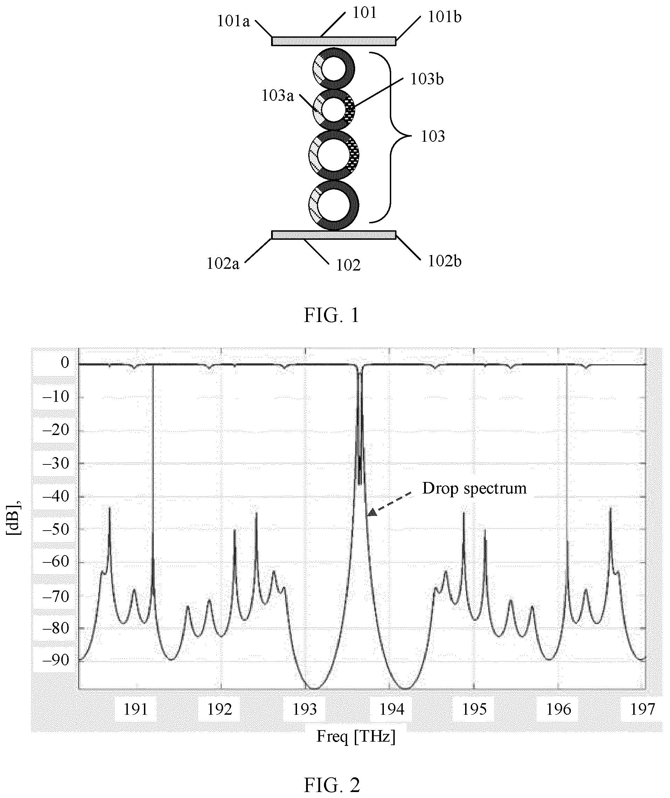

FIG. 1 is a schematic structural diagram of a first add/drop filter according to an embodiment of this application. The add/drop filter includes a first waveguide 101, a second waveguide 102, and a plurality of cascaded ring waveguides 103. The first waveguide 101 includes an input port 101a and an output port 101b. The second waveguide 102 includes an add port 102a and a drop port 102b. The input port 101a and the add port 102a are configured to input an optical signal, and the output port 101b and the drop port 102b are configured to output an optical signal. One of the plurality of ring waveguides 103 is coupled to the first waveguide 101, and another of the plurality of ring waveguides 103 is coupled to the second waveguide 102. An electrode 103a is disposed on each of the ring waveguides 103. A loss adjusting apparatus 103b is disposed on at least one of the ring waveguides except the ring waveguide coupled to the first waveguide 101.

For ease of description, the ring waveguide coupled to the first waveguide 101 is referred to as a first ring waveguide, and the ring waveguide coupled to the second waveguide 102 is referred to as a second ring waveguide in the following. It should be noted that, bandwidth of an add/drop filter applied to optical communication needs to reach 40 GHz, and a coupling coefficient between the first ring waveguide and the first waveguide 101 needs to be greater than an in-loop insertion loss of the first ring waveguide. If the loss adjusting apparatus 103b is also disposed on the first ring waveguide, critical coupling may also occur in a process of increasing the insertion loss in the first ring waveguide. Such critical coupling distorts an amplitude response and a phase response of a corresponding frequency of a pass-through spectrum corresponding to the output port 101b in the first waveguide 101, affecting normal transmission of a signal in the first waveguide 101. For the ring waveguides except the first ring waveguide, critical coupling caused by increasing the insertion loss does not occur. Therefore, the loss adjusting apparatus 103b may be disposed on each of the ring waveguides except the first ring waveguide. As shown in FIG. 1, the add/drop filter includes four cascaded ring waveguides, and the loss adjusting apparatus 103b is disposed on each of two middle ring waveguides.

It should be noted that, a quantity of the cascaded ring waveguides 103 is not limited in this application, and it is only required that a quantity of the cascaded ring waveguides 103 be not less than 2. In addition, a quantity of the loss adjusting apparatuss 103b and a location of the loss adjusting apparatus 103b are not limited either, and it is only required that the loss adjusting apparatus 103b be not placed on the first ring waveguide.

In this embodiment of this application, an operating wavelength of the add/drop filter is a resonance wavelength of each of the ring waveguides 103. In other words, an optical signal of the operating wavelength may be dropped through the drop port 102b, or an optical signal of the operating wavelength may be added through the add port 102a. When the operating wavelength needs to be reconfigured, normal transmission of signals of wavelengths except that of the operating wavelength from the input port to the output port may be affected. For example, signals of a total of four different wavelengths, λ1 to λ4, are input through the input port. If a current operating wavelength is λ1, the drop port outputs the signal whose wavelength is λ1, and the output port outputs the signals whose wavelengths are λ2, λ3, and λ4. In a process of adjusting the operating wavelength from λ1 to λ4 by using the conventional technology, moments at which operating wavelengths are λ2 and λ3 may occur, affecting normal transmission of the signals whose wavelengths are λ2 and λ3. Therefore, signal transmission between the first waveguide 101 and the second waveguide 102 needs to be blocked before the operating wavelength is switched, in other words, all optical signals input through the input port 101a are output through the output port 101b. Then, after the operating wavelength is switched, the signal transmission between the first waveguide 101 and the second waveguide 102 is recovered.

Specifically, the loss adjusting apparatus 103b is used to adjust an insertion loss in the at least one ring waveguide. Therefore, an optical signal that enters the ring waveguide is absorbed, and the ring waveguide does not resonate any more, to block the signal transmission between the first waveguide 101 and the second waveguide 102. It may be understood that a larger quantity of loss adjusting apparatuss 103b indicates a better effect of disabling a filtering function.

With reference to more accompanying drawings, the following further describes a process of disabling the filtering function by the add/drop filter.

FIG. 2 is a schematic diagram of a drop spectrum corresponding to the drop port 102b during normal dropping. To enable an optical signal of an operating wavelength to be normally dropped through the drop port 102b, the loss adjusting apparatus 103b is used to decrease the insertion loss in the ring waveguide corresponding to the loss adjusting apparatus 103b to a minimum value. It can be learned from FIG. 2 that a peak insertion loss of the drop spectrum is approximately 0 dB at this time.

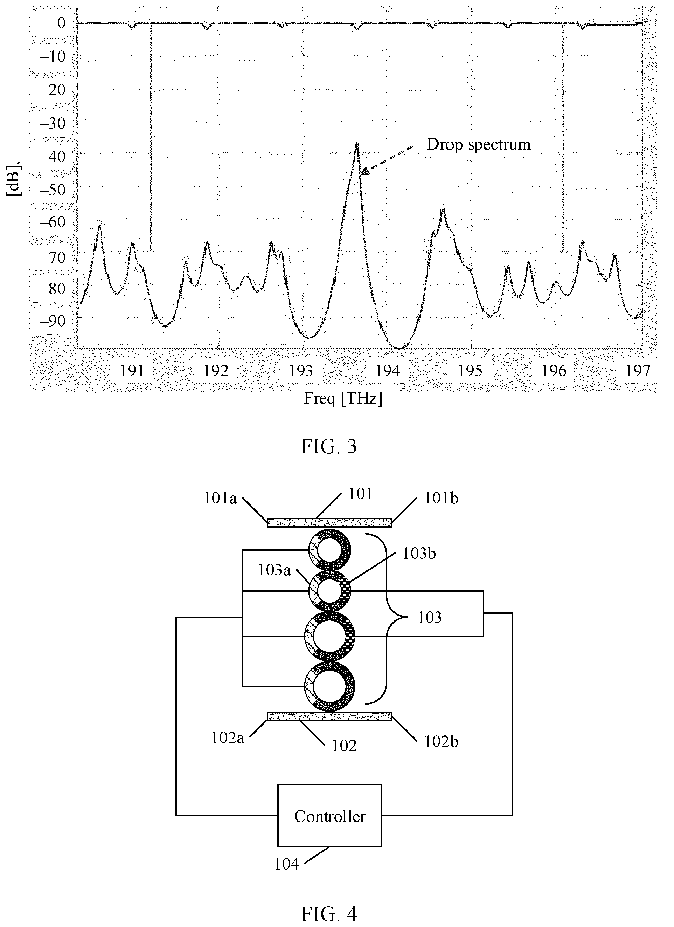

FIG. 3 is a schematic diagram of a drop spectrum corresponding to the drop port 102b when the filtering function is disabled. To disable the filtering function, the loss adjusting apparatus 103b is used to increase the insertion loss in the ring waveguide corresponding to the loss adjusting apparatus 103b to a maximum value. It can be learned from FIG. 3 that, compared with FIG. 2, a peak change of the drop spectrum exceeds 30 dB at this time, and the filtering function is disabled.

FIG. 4 is a schematic structural diagram of a second add/drop filter according to an embodiment of this application. In some embodiments of this application, the add/drop filter may further include a controller 104. The loss adjusting apparatus 103b uses an electrical structure that is based on a carrier dispersion effect. The controller 104 may change carrier concentration in the ring waveguide by controlling a load voltage of the loss adjusting apparatus 103b, to change the insertion loss in the ring waveguide. In this way, the filtering function is disabled or recovered. It should be noted that the loss adjusting apparatus 103b is not limited to the foregoing listed structures. For example, a layer of graphene may be added to the ring waveguide, and the graphene layer is used to change the insertion loss in the ring waveguide. This is not specifically limited herein.

In some embodiments of this application, the electrode 103a may be specifically a micro thermal electrode. The micro thermal electrode may be disposed on a periphery of each of the ring waveguides 103. For example, the micro thermal electrode may be disposed in a same plane with the ring waveguide 103, or the micro thermal electrode may be disposed in a plane different from that of the ring waveguide 103. The controller 104 may adjust the resonance wavelength of each of the ring waveguides 103 by controlling a temperature of the micro thermal electrode on each of the ring waveguides 103. Specifically, the ring waveguide 103 may use a material having a thermo-optic effect, for example, a dielectric material (silicon dioxide and silicon nitride) or a semiconductor material (III-V and silicon). Changing of the temperature of the micro thermal electrode may cause changing of a partial temperature of the ring waveguide 103, and a refractive index of the material may be changed based on the thermo-optic effect, to adjust the resonance wavelength of the ring waveguide 103. In addition, the ring waveguide 103 may alternatively use a material having an electro-optic effect, for example, lithium niobate. The controller 104 may alternatively change a refractive index of the material by controlling a voltage on the electrode 103a, to adjust the resonance wavelength of the ring waveguide 103.

It may be understood that, when the resonance wavelengths of all the ring waveguides 103 are the same, the resonance wavelength is an operating wavelength of the add/drop filter. The controller 104 may specifically include a drive of a microcontroller unit (Microcontroller Unit, MCU), the electrode 103a, and the loss adjusting apparatus 103b.

Optionally, circumferences of at least two of the plurality of ring waveguides 103 are different. Ring waveguides with different circumferences correspond to different free spectral ranges (free spectral ranges, FSRs). Specifically, FSR=λ2/L*neff. λ represents the resonance wavelength of the ring waveguide 103, L represents the circumference of the ring waveguide 103, and neff represents an effective refractive index of the ring waveguide 103. Therefore, a plurality of ring waveguides 103 with different radii extend an FSR of the add/drop filter based on a vernier effect. It may be understood that, if a structure of the ring waveguide 103 is a micro ring, at least two of the plurality of micro rings have different radii.

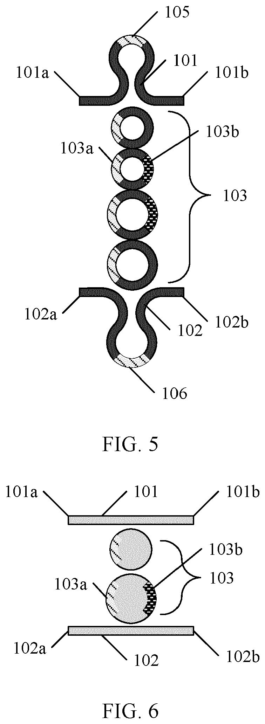

FIG. 5 is a schematic structural diagram of a third add/drop filter according to an embodiment of this application. In some embodiments of this application, a first tunable coupler (Tunable Coupler, TC) 105 is disposed at a position at which the first waveguide 101 is coupled to the first ring waveguide. A second tunable coupler 106 is disposed at a position at which the second waveguide 102 is coupled to the second ring waveguide. Specifically, as shown in FIG. 5, the first waveguide 101 and the second waveguide 102 each include an arc waveguide. The arc waveguide on the first waveguide 101 has two coupling points with the first ring waveguide, and the arc waveguide on the second waveguide 102 also has two coupling points with the second ring waveguide. Thermal electrodes are disposed on the two arc waveguides. The thermal electrodes are controlled to adjust coupling coefficients of the first tunable coupler 105 and the second tunable coupler 106, and therefore bandwidth and in-band isolation of the add/drop filter can be finely adjusted, thereby optimizing performance of the add/drop filter.

Optionally, only one of the first tunable coupler 105 and the second tunable coupler 106 may be reserved. This is not specifically limited herein. In addition, in addition to the foregoing listed arc waveguide, there may further be a waveguide of another shape between two coupling points of the first waveguide 101 and the first ring waveguide. For example, the waveguide may alternatively be of a boss shape. This is not specifically limited herein.

FIG. 6 is a schematic structural diagram of a fourth add/drop filter according to an embodiment of this application. Specifically, an overall structure of the add/drop filter shown in FIG. 6 is similar to that of the add/drop filter shown in FIG. 1, and same parts are not described herein again. A main difference lies in that the structure of the ring waveguide shown in FIG. 1 is a micro ring, while a structure of a ring waveguide shown in FIG. 6 is a micro disk.

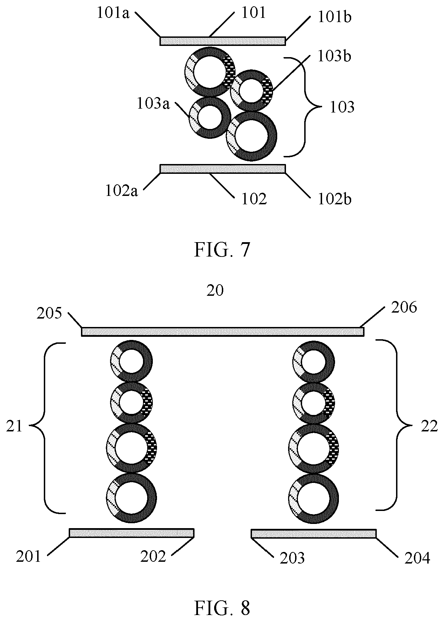

FIG. 7 is a schematic structural diagram of a fifth add/drop filter according to an embodiment of this application. Specifically, an overall structure of the add/drop filter shown in FIG. 7 is similar to that of the add/drop filter shown in FIG. 1, and same parts are not described herein again. A main difference lies in that a cascading mode of the plurality of ring waveguides 103 shown in FIG. 1 is serial cascading, while a first ring waveguide shown in FIG. 7 may be coupled to two middle ring waveguides, and a second ring waveguide may also be coupled to two middle ring waveguides. In this case, there may be a plurality of paths for signal transmission between the first waveguide 101 and the second waveguide 102, thereby improving scalability of this solution. This application includes but is not limited to the foregoing listed cascading modes of the ring waveguides.

It should be noted that the add/drop filter in embodiments of this application includes but is not limited to the foregoing five listed structures, and other variations based on the foregoing structures all fall within the protection scope of this application. For example, a plurality of groups of cascaded ring waveguides 103 may be included between the first waveguide 101 and the second waveguide 102. Each group of cascaded ring waveguides may use the structure shown in FIG. 1, or may use the structure shown in FIG. 7. This is not specifically limited herein.

In this embodiment of this application, a loss adjusting apparatus 103b is disposed on at least one of the ring waveguides 103 except the first ring waveguide, and the loss adjusting apparatus 103b is configured to adjust an insertion loss in the at least one ring waveguide 103. Before an operating wavelength of the add/drop filter is adjusted, the insertion loss in the at least one ring waveguide 103 may be adjusted to block signal transmission between the first waveguide 101 and the second waveguide 102. Because the loss adjusting apparatus 103b is not disposed on the first ring waveguide, in a process of using the loss adjusting apparatus 103b, critical coupling on the first ring waveguide is avoided, thereby ensuring normal transmission of a signal in the first waveguide 101.

In some embodiments of this application, an optical add/drop multiplexer (Optical Add/Drop Multiplexer, OADM) based on the foregoing add/drop filter is further provided. The optical add/drop multiplexer may include a plurality of cascaded add/drop filters.

FIG. 8 is a schematic structural diagram of an optical add/drop multiplexer 20 according to an embodiment of this application. The optical add/drop multiplexer 20 is a dual-channel optical add/drop multiplexer, in other words, the optical add/drop multiplexer 20 includes two cascaded add/drop filters, which are a first add/drop filter 21 and a second add/drop filter 22. The first add/drop filter 21 includes a first add port 201 and a first drop port 202. The second add/drop filter 22 includes a second add port 203 and a second drop port 204. In addition, the first add/drop filter 21 and the second add/drop filter 22 share a same pair of input port 205 and output port 206. Specifically, the add/drop filter in the optical add/drop multiplexer 20 in this embodiment is similar to the add/drop filter described in the foregoing embodiment. Details are not described herein again.

Based on the foregoing description of the add/drop filter, the following describes a wavelength control method corresponding to the add/drop filter. It should be noted that, descriptions of an apparatus structure corresponding to the following wavelength control method may be the same as the descriptions in the foregoing apparatus embodiment. However, this is not limited to the add/drop filter described above.

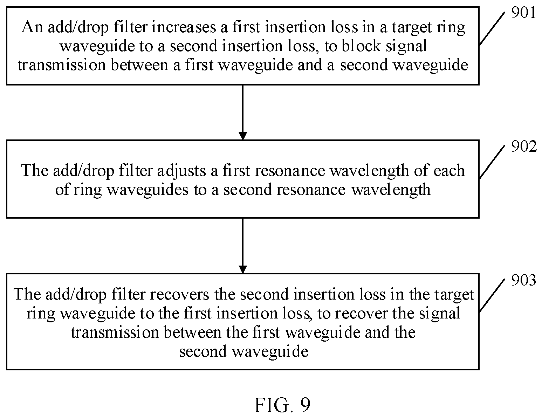

FIG. 9 is a schematic flowchart of a wavelength control method based on an add/drop filter according to an embodiment of this application. In this example, the wavelength control method includes the following steps.

It should be noted that, the add/drop filter in this embodiment may be specifically the add/drop filter in any one of the embodiments shown in FIG. 1, FIG. 4, FIG. 5, FIG. 6, and FIG. 7. For brief description, FIG. 1 is used as an example in some of the following descriptions.

901. The add/drop filter increases a first insertion loss in a target ring waveguide to a second insertion loss, to block signal transmission between a first waveguide and a second waveguide.

In this embodiment, the target ring waveguide is at least one of ring waveguides except a first ring waveguide. Specifically, a loss adjusting apparatus 103b disposed on the target ring waveguide may be used to adjust the insertion loss in the target ring waveguide, so that an optical signal that enters the ring waveguide is absorbed, and the ring waveguide does not resonate any more, to block the signal transmission between the first waveguide 101 and the second waveguide 102. For descriptions of the loss adjusting apparatus 103b, refer to related descriptions in the foregoing embodiments. Details are not described herein again.

902. The add/drop filter adjusts a first resonance wavelength of each of the ring waveguides to a second resonance wavelength.

In this embodiment, after the signal transmission between the first waveguide 101 and the second waveguide 102 is blocked, all optical signals input through the input port 101a are output through the output port 101b. Therefore, adjustment of an operating wavelength of the add/drop filter does not affect normal transmission of a signal in the first waveguide 101. Specifically, the first resonance wavelength of each of the ring waveguides may be adjusted to the second resonance wavelength by controlling a temperature or a voltage of an electrode on each of the ring waveguides. It may be understood that the first resonance wavelength is a current operating wavelength of the add/drop filter, and the second resonance wavelength is a new operating wavelength of the add/drop filter.

It should be noted that the first resonance wavelength of each of the ring waveguides may be synchronously adjusted to the second resonance wavelength, in other words, resonance wavelengths of different ring waveguides keep synchronous in an adjustment process.

Optionally, to further block the signal transmission between the first waveguide 101 and the second waveguide 102 to improve a blocking effect, the ring waveguides may be detuned first, in other words, each of the ring waveguides has a different resonance wavelength, and a resonance condition of the add/drop filter is destroyed. Therefore, all optical signals input through the input port 101a are output through the output port 101b. Then, a resonance wavelength of each of the ring waveguides is adjusted to the second resonance wavelength.

903. The add/drop filter recovers the second insertion loss in the target ring waveguide to the first insertion loss, to recover the signal transmission between the first waveguide and the second waveguide

In this embodiment, after the operating wavelength of the add/drop filter is switched, the second insertion loss in the target ring waveguide may be recovered to the first insertion loss, so that the signal transmission between the first waveguide 101 and the second waveguide 102 is recovered, and wavelength adding or wavelength dropping can be normally performed on the second waveguide 102.

## Claims

1. An add/drop filter, comprising: a first waveguide (101), a second waveguide (102), and a plurality of cascaded ring waveguides (103), wherein the first waveguide (101) comprises an input port (101a) and an output port (101b); the second waveguide (102) comprises an add port (102a) and a drop port (102b); one of the plurality of cascaded ring waveguides (103) is coupled to the first waveguide (101), and another of the plurality of cascaded ring waveguides (103) is coupled to the second waveguide (102); an electrode (103a) is disposed on each of the ring waveguides (103); and a loss adjusting apparatus (103b) is disposed on at least one of the plurality of cascaded ring waveguides (103) except the one of the plurality of ring waveguides, and the loss adjusting apparatus (103b) is configured to adjust an insertion loss in the at least one ring waveguide (103).

2. The add/drop filter according to claim 1, wherein circumferences of at least two of the plurality of ring waveguides (103) are different.

3. The add/drop filter according to claim 1 or 2, wherein the add/drop filter further comprises a controller (104), and the controller (104) is configured to adjust the insertion loss in the at least one ring waveguide (103) by controlling the loss adjusting apparatus (103b) on the at least one ring waveguide (103).

4. The add/drop filter according to claim 3, wherein the controller (104) is further configured to adjust a resonance wavelength of each of the ring waveguides (103) by controlling a temperature or a voltage of the electrode (103a) on each of the ring waveguides (103).

5. The add/drop filter according to any one of claims 1 to 4, wherein a first tunable coupler, TC, (105) is disposed at a position at which the first waveguide (101) is coupled to the one of the ring waveguides (103), and/or a second TC (105) is disposed at a position at which the second waveguide (102) is coupled to the another of the ring waveguides (103).

6. The add/drop filter according to any one of claims 1 to 5, wherein each of the ring waveguides (103) is a micro ring or a micro disk.

7. The add/drop filter according to any one of claims 1 to 5, wherein a material of the first waveguide (101), the second waveguide (102), and the ring waveguide (103) is silicon, III-V, silicon nitride, SiN, or lithium niobate, LiNbO3.

8. An optical add/drop multiplexer (20), comprising a plurality of the add/drop filters according to any one of claims 1 to 7 that are cascaded.

9. A wavelength control method based on an add/drop filter, wherein the method comprises:
increasing (901), by the add/drop filter, a first insertion loss in a target ring waveguide (103) to a second insertion loss, to block signal transmission between a first waveguide (101) and a second waveguide (102), wherein the add/drop filter comprises the first waveguide (101), the second waveguide (102), and a plurality of cascaded ring waveguides /103), wherein an electrode is disposed on each of the ring waveguides (103);
the target ring waveguide (103) comprises at least one of the plurality of cascaded ring waveguides (103) except a first ring waveguide (103); and the first ring waveguide (103) is a ring waveguide, in the plurality of cascaded ring waveguides (103), coupled to the first waveguide (101);
adjusting (902), by the add/drop filter, a first resonance wavelength of each of the ring waveguides (103) to a second resonance wavelength; and
recovering (903), by the add/drop filter, the second insertion loss in the target ring waveguide (103) to the first insertion loss, to recover the signal transmission between the first waveguide (101) and the second waveguide (102).

10. The method according to claim 9, wherein the adjusting (901), by the add/drop filter, a first resonance wavelength of each of the ring waveguides (103) to a second resonance wavelength comprises:
adjusting, by the add/drop filter, the first resonance wavelength of each of the ring waveguides (103) to the second resonance wavelength by controlling a temperature or a voltage of an electrode (103a) on each of the ring waveguides (103).

11. The method according to claim 9, wherein the adjusting (901), by the add/drop filter, a first resonance wavelength of each of the ring waveguides (103) to a second resonance wavelength comprises:
adjusting, by the add/drop filter, the first resonance wavelength of each of the ring waveguides (103), to detune the plurality of the ring waveguides (103); and
adjusting, by the add/drop filter, a resonance wavelength of each of the ring waveguides (103) to the second resonance wavelength.

## Patentansprüche

1. Add/Drop-Filter, das umfasst: einen ersten Wellenleiter (101), einen zweiten Wellenleiter (102) und eine Vielzahl von kaskadierten Ringwellenleitern (103), wobei der erste Wellenleiter (101) einen Eingangs-Port (101a) und einen Ausgangs-Port (101b) umfasst; der zweite Wellenleiter (102) einen Add-Port (102a) und einen Drop-Port (102b) umfasst; einer der Vielzahl von kaskadierten Ringwellenleitern (103) mit dem ersten Wellenleiter (101) gekoppelt ist und ein anderer der Vielzahl von kaskadierten Ringwellenleitern (103) mit dem zweiten Wellenleiter (102) gekoppelt ist; an jedem der Ringwellenleiter (103) eine Elektrode (103a) angeordnet ist; und eine Dämpfungsanpassungsvorrichtung (103b) an mindestens einem der Vielzahl von kaskadierten Ringwellenleitern (103) mit Ausnahme des einen der Vielzahl von Ringwellenleitern angeordnet ist und die Dämpfungsanpassungsvorrichtung (103b) konfiguriert ist, um eine Einfügungsdämpfung in dem mindestens einen Ringwellenleiter (103) anzupassen.

2. Add/Drop-Filter nach Anspruch 1, wobei Umfänge von mindestens zwei der Vielzahl von Ringwellenleitern (103) unterschiedlich sind.

3. Add/Drop-Filter nach Anspruch 1 oder 2, wobei das Add/Drop-Filter ferner eine Steuereinrichtung (104) umfasst und die Steuereinrichtung (104) konfiguriert ist, um die Einfügungsdämpfung in dem mindestens einen Ringwellenleiter (103) durch Steuern der Dämpfungsanpassungsvorrichtung (103b) an dem mindestens einen Ringwellenleiter (103) anzupassen.

4. Add/Drop-Filter nach Anspruch 3, wobei die Steuereinrichtung (104) ferner konfiguriert ist, um eine Resonanzwellenlänge jedes der Ringwellenleiter (103) durch Steuern einer Temperatur oder einer Spannung der Elektrode (103a) an jedem der Ringwellenleiter (103) anzupassen.

5. Add/Drop-Filter nach einem der Ansprüche 1 bis 4, wobei ein erster abstimmbarer Koppler, TC, (105) an einer Position, an der der erste Wellenleiter (101) mit dem einen der Ringwellenleiter (103) gekoppelt ist, angeordnet ist und/oder ein zweiter TC (105) an einer Position, an der der zweite Wellenleiter (102) mit dem anderen der Ringwellenleiter (103) gekoppelt ist, angeordnet ist.

6. Add/Drop-Filter nach einem der Ansprüche 1 bis 5, wobei jeder der Ringwellenleiter (103) ein Mikroring oder eine Mikroscheibe ist.

7. Add/Drop-Filter nach einem der Ansprüche 1 bis 5, wobei ein Material des ersten Wellenleiters (101), des zweiten Wellenleiters (102) und des Ringwellenleiters (103) Silizium, III-V, Siliziumnitrid, SiN, oder Lithiumniobat, LiNbO3, ist.

8. Optischer Add/Drop-Multiplexer (20), der eine Vielzahl der Add/Drop-Filter nach einem der Ansprüche 1 bis 7 umfasst, die kaskadiert sind.

9. Wellenlängensteuerverfahren basierend auf einem Add/Drop-Filter, wobei das Verfahren umfasst:
Erhöhen (901), durch das Add/Drop-Filter, einer ersten Einfügungsdämpfung in einem Zielringwellenleiter (103) auf eine zweite Einfügungsdämpfung, um eine Signalübertragung zwischen einem ersten Wellenleiter (101) und einem zweiten Wellenleiter (102) zu blockieren, wobei das Add/Drop-Filter den ersten Wellenleiter (101), den zweiten Wellenleiter (102) und eine Vielzahl von kaskadierten Ringwellenleitern (103) umfasst, wobei an jedem der Ringwellenleiter (103) eine Elektrode angeordnet ist;
der Ziel-Ringwellenleiter (103) mindestens einen der Vielzahl von kaskadierten Ringwellenleitern (103) mit Ausnahme eines ersten Ringwellenleiters (103) umfasst;
und der erste Ringwellenleiter (103) ein Ringwellenleiter in der Vielzahl von kaskadierten Ringwellenleitern (103) ist, der mit dem ersten Wellenleiter (101) gekoppelt ist;
Anpassen (902), durch das Add/Drop-Filter, einer ersten Resonanzwellenlänge jedes der Ringwellenleiter (103) an eine zweite Resonanzwellenlänge; und
Wiederherstellen (903), durch das Add/Drop-Filter, der zweiten Einfügungsdämpfung in dem Zielringwellenleiter (103) auf die erste Einfügungsdämpfung, um die Signalübertragung zwischen dem ersten Wellenleiter (101) und dem zweiten Wellenleiter (102) wiederherzustellen.

10. Verfahren nach Anspruch 9, wobei das Anpassen (901), durch das Add/Drop-Filter, einer ersten Resonanzwellenlänge jedes der Ringwellenleiter (103) an eine zweite Resonanzwellenlänge umfasst:
Anpassen, durch das Add/Drop-Filter, der ersten Resonanzwellenlänge jedes der Ringwellenleiter (103) an die zweite Resonanzwellenlänge durch Steuern einer Temperatur oder einer Spannung einer Elektrode (103a) an jedem der Ringwellenleiter (103).

11. Verfahren nach Anspruch 9, wobei das Anpassen (901), durch das Add/Drop-Filter, einer ersten Resonanzwellenlänge jedes der Ringwellenleiter (103) an eine zweite Resonanzwellenlänge umfasst:
Anpassen, durch das Add/Drop-Filter, der ersten Resonanzwellenlänge jedes der Ringwellenleiter (103), um die Vielzahl der Ringwellenleiter (103) zu verstimmen; und
Anpassen, durch das Add/Drop-Filter, einer Resonanzwellenlänge jedes der Ringwellenleiter (103) an die zweite Resonanzwellenlänge.

## Revendications

1. Filtre d'insertion/extraction comprenant : un premier guide d'ondes (101), un second guide d'ondes (102) et une pluralité de guides d'ondes annulaires en cascade (103), dans lequel le premier guide d'ondes (101) comprend un port d'entrée (101a) et un port de sortie (101b) ; le second guide d'ondes (102) comprend un port d'insertion (102a) et un port d'extraction (102b) ; un de la pluralité de guides d'ondes annulaires en cascade (103) est couplé au premier guide d'ondes (101), et un autre de la pluralité de guides d'ondes annulaires en cascade (103) est couplé au second guide d'ondes (102) ; une électrode (103a) est disposée sur chacun des guides d'ondes annulaires (103) ; et un appareil d'ajustement des pertes (103b) est disposé sur au moins l'un parmi la pluralité de guides d'ondes annulaires en cascade (103) à l'exception de l'un de la pluralité de guides d'ondes annulaires, et l'appareil d'ajustement des pertes (103b) est configuré pour ajuster une perte d'insertion dans l'au moins un guide d'ondes annulaire (103).

2. Filtre d'insertion/extraction selon la revendication 1, dans lequel des circonférences d'au moins deux de la pluralité de guides d'ondes annulaires (103) sont différentes.

3. Filtre d'insertion/extraction selon la revendication 1 ou 2, dans lequel le filtre d'insertion/extraction comprend en outre un dispositif de commande (104), et le dispositif de commande (104) est configuré pour ajuster la perte d'insertion dans l'au moins un guide d'ondes annulaire (103) en commandant l'appareil d'ajustement de perte (103b) sur l'au moins un guide d'ondes annulaire (103).

4. Filtre d'insertion/extraction selon la revendication 3, dans lequel le dispositif de commande (104) est en outre configuré pour ajuster une longueur d'onde de résonance de chacun des guides d'ondes annulaires (103) en commandant une température ou une tension de l'électrode (103a) sur chacun des guides d'ondes annulaires (103).

5. Filtre d'insertion/extraction selon l'une quelconque des revendications 1 à 4, dans lequel un premier coupleur accordable, TC (105) est disposé au niveau d'une position où le premier guide d'ondes (101) est couplé à l'un des guides d'ondes annulaires (103), et/ou un second TC (105) est disposé au niveau d'une position où le second guide d'ondes (102) est couplé à l'autre des guides d'ondes annulaires (103).

6. Filtre d'insertion/extraction selon l'une quelconque des revendications 1 à 5, dans lequel chacun des guides d'ondes annulaires (103) est un micro-anneau ou un microdisque.

7. Filtre d'insertion/extraction selon l'une quelconque des revendications 1 à 5, dans lequel un matériau du premier guide d'onde (101), du second guide d'onde (102) et du guide d'onde annulaire (103) est le silicium, III-V, le nitrure de silicium, SiN, ou le niobate de lithium, LiNbO3.

8. Multiplexeur optique d'insertion/extraction (20), comprenant une pluralité de filtres d'insertion/extraction selon l'une quelconque des revendications 1 à 7 qui sont en cascade.

9. Procédé de commande de longueur d'onde basé sur un filtre d'insertion/extraction, dans lequel le procédé comprend :
l'augmentation (901), par le filtre d'insertion/extraction, d'une première perte d'insertion dans un guide d'onde annulaire cible (103) à une seconde perte d'insertion, pour bloquer une transmission de signal entre un premier guide d'onde (101) et un second guide d'onde (102), dans lequel le filtre d'insertion/extraction comprend le premier guide d'onde (101), le second guide d'onde (102), et une pluralité de guides d'onde annulaires en cascade (103), dans lequel une électrode est disposée sur chacun des guides d'onde annulaires (103) ;
le guide d'ondes annulaire cible (103) comprend au moins l'un parmi la pluralité de guides d'ondes annulaires en cascade (103), à l'exception d'un premier guide d'ondes annulaire (103) ; et le premier guide d'ondes annulaire (103) est un guide d'ondes annulaire, dans la pluralité de guides d'ondes annulaires en cascade (103), couplé au premier guide d'ondes (101) ;
l'ajustement (902), par le filtre d'insertion/extraction, d'une première longueur d'onde de résonance de chacun des guides d'ondes annulaires (103) à une seconde longueur d'onde de résonance ; et
la récupération (903), par le filtre d'insertion/extraction, de la seconde perte d'insertion dans le guide d'ondes annulaire cible (103) par rapport à la première perte d'insertion, afin de rétablir la transmission de signal entre le premier guide d'ondes (101) et le second guide d'ondes (102).

10. Procédé selon la revendication 9, dans lequel l'ajustement (901), par le filtre d'insertion/extraction, d'une première longueur d'onde de résonance de chacun des guides d'ondes annulaires (103) à une seconde longueur d'onde de résonance comprend :
l'ajustement, par le filtre d'insertion/extraction, de la première longueur d'onde de résonance de chacun des guides d'ondes annulaires (103) à la seconde longueur d'onde de résonance en commandant une température ou une tension d'une électrode (103a) sur chacun des guides d'ondes annulaires (103).

11. Procédé selon la revendication 9, dans lequel l'ajustement (901), par le filtre d'insertion/extraction, d'une première longueur d'onde de résonance de chacun des guides d'ondes annulaires (103) à une seconde longueur d'onde de résonance comprend :
l'ajustement, par le filtre d'insertion/extraction, de la première longueur d'onde de résonance de chacun des guides d'ondes annulaires (103), pour désaccorder la pluralité des guides d'ondes annulaires (103) ; et
l'ajustement, par le filtre d'insertion/extraction, d'une longueur d'onde de résonance de chacun des guides d'ondes annulaires (103) à la seconde longueur d'onde de résonance.
